Europäisches Patentamt

European Patent Office

Office européen des brevets

(19)

(11) Veröffentlichungsnummer : **0 084 175**
**B1**

(12) **EUROPÄISCHE PATENTSCHRIFT**

(45) Veröffentlichungstag der Patentschrift :
09.09.87

(51) Int. Cl.⁴ : **F 02 M 21/02**

(21) Anmeldenummer : 82112086.2

(22) Anmeldetag : 29.12.82

(54) Vorrichtung zur Einblasung von Flüssiggas.

(30) Priorität : 14.01.82 DE 3200865

(43) Veröffentlichungstag der Anmeldung :
27.07.83 Patentblatt 83/30

(45) Bekanntmachung des Hinweises auf die Patenterteilung : 09.09.87 Patentblatt 87/37

(84) Benannte Vertragsstaaten :
DE FR GB IT NL

(56) Entgegenhaltungen :
DE-B- 1 120 210
FR-A- 2 422 832
GB-A- 1 565 706
US-A- 1 932 370
US-A- 2 918 079
US-A- 3 015 548
US-A- 4 020 810
ENGINE DESIGN AND APPLICATIONS, Band 2, Nr. 6, Juni 1966, Seiten 20-22, London, G.B.; "Liquid petroleum gas systems for i.c. engines"

(73) Patentinhaber : ROBERT BOSCH GMBH
Postfach 50
D-7000 Stuttgart 1 (DE)

(72) Erfinder : van der Weide, Jouke
Leeuwendaallaan 51
NL-2281 GK Rijswijk (NL)

## Beschreibung

### Stand der Technik

Die Erfindung geht aus von einer Vorrichtung zur Einblasung von Flüssiggas nach der Gattung des Patentanspruchs. Es ist nach der US-A-4 020 810 schon eine Vorrichtung zur Einblasung von Flussiggas bekannt, bei der jedoch als Zumeßventil ein Sitzventil dient. Zwar zeigt die US-A-1 932 370 einen als Zumeßventil dienenden Kolben in einer Führungsbohrung, jedoch ist dieser Schrift kein Hinweis auf eine Abdichtung des Kolbens insbesondere in Ruhestellung zu entnehmen.

### Vorteile der Erfindung

Die erfindungsgemäße Vorrichtung mit den kennzeichnenden Merkmalen des Patentanspruchs hat demgegenüber den Vorteil, daß eine der durch das Saugrohr strömenden Luftmenge möglichst proportionale Flüssiggasmenge zugemessen werden kann, wobei sichergestellt ist, daß im Abstellfall ein unerwünschtes Austreten von Flüssiggas aus der Anlage verhinderbar ist und ein sicherer Start gewährleistet wird.

### Zeichnung

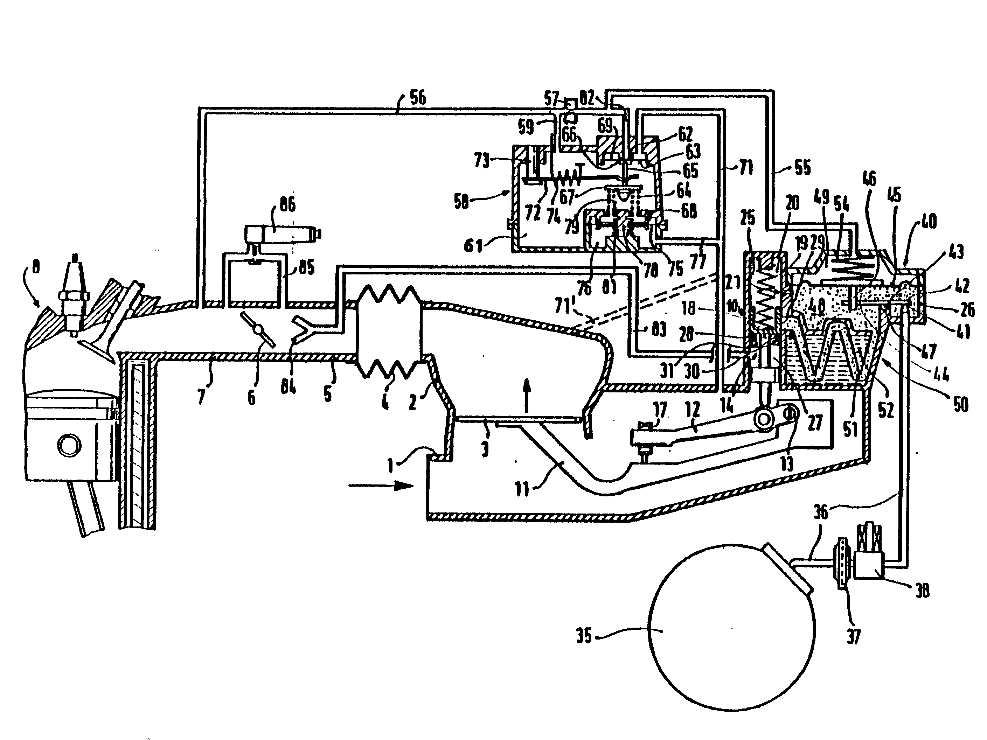

Ein Ausführungsbeispiel der Erfindung ist in der Zeichnung vereinfacht dargestellt und in der nachfolgenden Beschreibung näher erläutert.

### Beschreibung des Ausführungsbeispieles

Bei der in der Zeichnung dargestellten Einspritzanlage für Flüssiggas (LPG) strömt die Verbrennungsluft stromabwärts eines nicht dargestellten Luftfilters in Pfeilrichtung über einen Saugrohrabschnitt 1 in einen konischen Abschnitt 2, in dem ein Luftmeßorgan 3 angeordnet ist und weiterhin durch einen elastisch verformbaren Abschnitt 4 und einen Abschnitt 5 über eine Drosselklappe 6 zu einem Saugrohrabschnitt 7 und von dort zu einem oder mehreren Zylindern 8 einer Brennkraftmaschine, beispielsweise einer gemischverdichtenden fremdgezündeten oder einer selbstzündenden Brennkraftmaschine. Das Luftmeßorgan 3 ist beispielsweise eine quer zur Strömungsrichtung angeordnete Stauklappe 3, die sich im konischen Abschnitt 2 des Saugrohres beispielsweise nach einer annähernd linearen Funktion der durch das Saugrohr strömenden Luftmenge bewegt, wobei durch eine konstante am Luftmeßorgan 3 angreifende Rückstellkraft sowie einen konstanten vor dem Luftmeßorgan 3 herrschenden Luftdruck der zwischen dem Luftmeßorgan 3 und der Drosselklappe 6 herrschende Druck ebenfalls konstant bleibt. Das Luftmeßorgan 3 steuert ein Zumeßventil 10. Zur Übertragung der Stellbewegung des Luftmeßorgans 3 dient ein mit ihm verbundener Schwenkhebel 11, der gemeinsam mit einem Korrekturhebel 12 an einem Drehpunkt 13 gelagert ist und bei seiner Schwenkbewegung ein als Zumeßkolben 14 ausgebildetes bewegliches Ventilteil des Zumeßventils 10 betätigt. An einer Gemischregulierschraube 17 zwischen Schwenkhebel 11 und Korrekturhebel 12 läßt sich das gewünschte Kraftstoff-Luft-Gemisch korrigieren. An dem dem Schwenkhebel 11 abgewandten Ende 18 des Zumeßkolbens 14 greift eine Rückstellfeder 19 an, die bestrebt ist, über den Zumeßkolben 14 das Luftmeßorgan 3 in seine Ausgangslage zu verschwenken, in der es bei nicht laufender Brennkraftmaschine den Saugrohrquerschnitt nahezu verschließt. Die Rückstellfeder 19 ist dabei in einem Federraum 20 angeordnet, der vorzugsweise über eine drosselnde Stichleitung 21 zu einem Verdampferraum 48 entlüftet ist.

Der Zumeßkolben 14 ist in einer Führungsbohrung 25 des Zumeß- und Verdampfergehäuses 26 gleitbar gelagert und ist mit einer Ringnut 27 versehen. Dem Schwenkhebel 11 abgewandt wird die Ringnut 27 durch eine axiale Begrenzungsfläche 28 begrenzt, die bei einer axialen Bewegung des Zumeßkolbens 14 eine in der Wandung der Führungsbohrung 25 ausgebildete Zumeßöffnung 29, beispielsweise in Form eines Schlitzes, mehr oder weniger zur Ringnut 27 hin öffnet. In die Ringnut 27 ragt eine Ringschulter 30 der Führungsbohrung 25, an der der Begrenzungsfläche 28 zugewandt ein Dichtring 31 anliegt, gegen den bei nicht strömender Luft im Abstellfall der Brennkraftmaschine die Begrenzungsfläche 28 des Zumeßkolbens 14 durch die Rückstellfeder 19 dichtend gepreßt wird.

Die Kraftstoffversorgung der Einspritzanlage erfolgt aus einem Flüssiggastank 35, der als ein speziell konstruierter Druckbehälter gestaltet ist und der Flüssiggas in gefülltem Zustand unter einem Druck von ca. 15 bis 20 bar aufnimmt. Eine Versorgungsleitung 36 führt über einen Filter 37 und ein Absperrventil 38, das bei abgeschalteter Anlage die Versorgungsleitung 36 unterbricht, zu einem Verdampfer-Druckregelventil 40. Die Versorgungsleitung 36 endet im Verdampfer-Druckregelventil 40 in einer Regeldüse 41, mit der beispielsweise das eine als bewegliches Ventilteil dienende Ende 42 eines zweiarmigen Hebels 43 derart zusammenarbeitet, daß der Ausströmquerschnitt der Regeldüse 41 mehr oder weniger geöffnet wird. An dem anderen Ende 44 des Hebels 43 greift eine als nachgiebige Wandung im Verdampfer-Druckregelventil 40 vorgesehene Verdampfermembran 45 über einen Betätigungsstift 46 an. Der Hebel 43 ist um einen Auflagerpunkt 47 schwenkbar. Die Verdampfermembran 45 trennt den Verdampferraum 48 von einem Steuerraum 49. Der Verdampferraum 48 nimmt die Regeldüse 41, den Hebel 43 und das aus der Regeldüse 41 austretende Flüssiggas auf, das im Verdampferraum verdampft sowie auf einen bestimmten Druck entspannt wird und über eine durch einen Wärmetauscher 50 führende Speiseleitung 51 zur Zumeßöffnung 29 strömen kann. Durch den Wärmetauscher 50 kann beispielsweise das Kühlwasser 52 der Brennkraftmaschine strömen.

In dem Steuerraum 49 des Verdampfer-Druckregelventiles 40 ist eine Druckfeder 54 angeordnet, die sich an der Verdampfermembran 45 derart abstützt, daß sie bestrebt ist, das Ende 42 des Hebels 43 von der Regeldüse 41 abzuheben und damit eine größere Flüssiggasmenge austreten zu lassen. Von dem Steuerraum 49 des Verdampfer-Druckregelventils 40 führt eine Steuerdruckleitung 55 zu einer Unterdruckleitung 56, die mit dem Saugrohrabschnitt 7 stromabwärts der Drosselklappe 6 in Verbindung steht und eine Drosselstelle 57 aufweist. Der Luftdruck in der Steuerdruckleitung 55 ist durch ein Drucksteuerventil 58 beeinflußbar. Das Drucksteuerventil 58 dient zur gewünschten Anpassung des Gemisches an die Betriebsbedingungen, beispielsweise zur Abmagerung des Flüssiggas-Luft-Gemisches während des Betriebes der Brennkraftmaschine im Teillastbereich und kann außerdem zur Anreicherung des Gemisches während der Warmlaufphase, bei Beschleunigung und Vollast der Brennkraftmaschine dienen. Hierzu zweigt von der Unterdruckleitung 56 vor der Drosselstelle 57 eine Teilleitung 59 ab, die in eine Unterdruckkammer 61 des beispielsweise dargestellten Drucksteuerventiles 58 mündet. Das Drucksteuerventil 58 ist als Flachsitzventil ausgebildet, mit einem festen Ventilsitz 62 und einer Ventilmembran 63, die in Schließrichtung des Drucksteuerventiles 58 unter anderem von einer Ventilfeder 64 belastet wird. Die Ventilfeder 64 wirkt über einen Ventilstift 65, der zwischen einem an der Ventilmembran 63 angreifenden Auflager 66 und einem Federteller 67, an dem die Ventilfeder 64 andererseits angreift, angeordnet ist, auf die Ventilmembran 63. Die Ventilfeder 64 stützt sich, dem Federteller 67 abgewandt, andererseits an einer Anlage 68 ab. Die Ventilmembran 63 trennt die Unterdruckkammer 61 von einer Hochdruckkammer 69 in die der Ventilsitz 62 ragt. Die Hochdruckkammer 69 steht über eine Hochdruckleitung 71 mit dem Saugrohrabschnitt 1 stromaufwärts des Luftmeßorganes 3 in Verbindung, sie kann jedoch auch, wie gestrichelt bei 71' angedeutet ist, mit dem Saugrohrabschnitt 2, 4, 5 unmittelbar stromabwärts des Luftmeßorganes 3 in Verbindung stehen. Bei Temperaturen unterhalb der Motorbetriebstemperatur von ca. 80 °C kann der durch den Ventilstift 65 übertragenen Schließkraft auf das Drucksteuerventil 58 eine Bimetallfeder 72 entgegenwirken, die an ihrem einen Ende während der Warmlaufphase am Federteller 67 anliegt und deren anderes Ende an einem in das Gehäuse des Drucksteuerventiles 58 eingepreßten Bolzen 73 befestigt ist. Auf der Bimetallfeder 72 kann ein elektrischer Heizkörper 74 aufgesetzt sein, der ab der Zündung der Brennkraftmaschine mit Strom versorgt wird. Das Drucksteuerventil 58 weist weiterhin eine Steuermembran 75 auf, die die Unterdruckkammer 61 von einer Druckkammer 76 trennt. Die Druckkammer 76 steht über eine Druckleitung 77 mit der Hochdruckleitung 71 bzw. 71' in Verbindung. An der Steuermembran 75 greift ein Federteller 78 an, an dem sich eine Steuerfeder 79 abstützt, die parallel zur Ventilfeder 64 verlaufend andererseits am Federteller 67 angreift. Die Bewegung der Steuermembran 75 ist dadurch begrenzbar, daß der Federteller 78 in einer Bewegungsrichtung an der Anlage 68 und in der entgegengesetzten Bewegungsrichtung an einem Anschlag 81 zum Anliegen kommen kann. Von dem festen Ventilsitz 62 führt eine Korrekturleitung 82 zur Steuerdruckleitung 55 bzw. über die Drosselstelle 57 zur Unterdruckleitung 56.

Anstelle des dargestellten Drucksteuerventiles 58 kann auch ein anderes, beispielsweise elektromagnetisch betätigbares Drucksteuerventil vorgesehen sein, daß in Abhängigkeit von in elektrische Signale umgewandelten Betriebskenngrößen wie Temperatur, Drehzahl, Drosselklappenstellung, Abgaszusammensetzung u. a. den Luftdruck in der Steuerdruckleitung 55 zur Gemischanpassung beeinflußt.

Die Wirkungsweise der Anlage ist folgende :

Beim Start der Brennkraftmaschine wird das Absperrventil 38 geöffnet und das Flüssiggas strömt über die Versorgungsleitung 36 zur Regeldüse 41 des Verdampfer-Druckregelventiles 40, durch das ein konstanter, jedoch in Abhängigkeit von Betriebskenngrößen der Brennkraftmaschine änderbarer Druck des verdampften Flüssiggases einregelbar ist. Das im Verdampferraum 48 verdampfte Flüssiggas durchströmt über die Speiseleitung 51 den Wärmetauscher 50 und wird durch das noch eine niedrige Temperatur aufweisende Kühlwasser, dem die erforderliche Verdampfungswärme entzogen wird, gekühlt, so daß das Gas eine höhere Dichte aufweist, als bei wärmerem Kühlwasser nach dem Abschluß der Warmlaufphase der Brennkraftmaschine. Diese höhere Dichte führt zu einer größeren zugemessenen Gasmenge am Zumeßventil 10 und damit zu einer Anreicherung des der Brennkraftmaschine zugeführten Gemisches. Mit dem Start saugt die Brennkraftmaschine über das Saugrohr 1 Luft an, durch die das Meßorgan 3 eine gewisse Auslenkung aus seiner Ruhelage erfährt. Entsprechend der Auslenkung des Meßorgans 3 wird über den Hebel 11 auch der Zumeßkolben 14 verschoben, dessen Begrenzungsfläche 28 entsprechend der Stellung des Zumeßkolbens 14 mehr oder weniger die Zumeßöffnung 29 zur Ringnut 27 hin öffnet, so daß in Abhängigkeit von der durch das Luftmeßorgan 3 ermittelten angesaugten Luftmenge eine entsprechende Gasmenge am Zumeßventil 10 zugemessen wird, die über eine mit der Ringnut 27 des Zumeßkolbens 14 in Verbindung stehende Einblaseleitung 83 beispielsweise zum Saugrohrabschnitt 5 geführt und über eine oder mehrere Düsen 84 stromaufwärts der Drosselklappe 6 in den Saugrohrabschnitt 5 eingeblasen wird. Zur Steuerung einer größeren Gemischmenge während des Warmlaufes der Brennkraftmaschine ist am Saugrohr 5, 7 ein die Drosselklappe 6 umgehender Bypass 85 vorgesehen, dessen Querschnitt während der Warmlaufphase der Brennkraftmaschine in bekannter Weise durch ein Zusatzgemischventil 86 temperaturabhängig gesteuert wird.

Die direkte Verbindung zwischen Meßorgan 3 und Zumeßkolben 14 bewirkt ein bestimmtes Verhältnis zwischen angesaugter Luftmenge und zugemessener Gasmenge. Um eine weitere Anreicherung des der Brennkraftmaschine zugeführten Gas-Luft-Gemisches während der Warmlaufphase der Brennkraftmaschine zu erzielen, kann durch das Drucksteuerventil 58 in dem Steuerraum 49 des VerdampferDruckregelventils 40 ein relativ hoher Druck gesteuert werden, der durch eine größere Öffnung des VerdampferDruckregelventiles 40 zu einem höheren Druck des verdampften Flüssiggases an der Zumeßöffnung 29 führt, wodurch infolge des größeren Druckgefälles durch das Zumeßventil 10 eine größere Gasmenge zugemessen und über die Düse 84 eingeblasen wird. Hierfür greift während der Warmlaufphase der Brennkraftmaschine an dem Federteller 67 des Drucksteuerventiles 58 die Bimetallfeder 72 derart an, daß die Ventilfeder 64 und die Steuerfeder 79 entlastet werden und die Ventilmembran 63 vom Ventilsitz 62 so weit abhebt, daß über die Korrekturleitung 82 der in der Hochdruckleitung 71, 71' wirkende Luftdruck den über die Unterdruckleitung 56 an der Steuerdruckleitung 55 liegenden Unterdruck abbaut, wodurch ein höherer Druck in dem Steuerraum 49 des Verdampfer-Druckregelventiles 40 wirkt und das Verdampfer-Druckregelventil 40 mehr öffnet. Nach Ablauf der Warmlaufphase der Brennkraftmaschine bzw. Aufheizung der Bimetallfeder 72 durch den elektrischen Heizkörper 74 biegt sich die Bimetallfeder 72 in Richtung von dem Federteller 67 weg und kommt außer Eingriff mit dem Federteller 67, so daß die Federkräfte von Ventilfeder 64 und Steuerfeder 79 voll wirksam werden und bewirken, daß die Ventilmembran 63 entsprechend den herrschenden Saugrohrdrücken den Ventilsitz 62 mehr schließt. Bei durch die Ventilmembran 63 mehr geschlossenem Ventilsitz 62 wird der Unterdruck des Saugrohres 7 stromabwärts der Drosselklappe 6 über die Unterdruckleitung 56 in der Steuerdruckleitung 55 stärker wirksam, wodurch im Steuerraum 49 der Druck des pneumatischen Steuermediums ebenfalls vermindert wird und das Verdampfer-Druckregelventil 40 mehr schließt, also einen geringeren Druck des verdampften Flüssiggases stromaufwärts der Zumeßöffnung 29 einregelt, was zu einer Abmagerung des der Brennkraftmaschine zugeführten Gemisches führt. Eine derartige Abmagerung des Gemisches ist bei einem Betrieb der Brennkraftmaschine im Teillastbereich erwünscht. Im Teillastbereich der Brennkraftmaschine ist der Unterdruck im Saugrohrabschnitt 7 und damit über die Unterdruckleitung 56 und die Teilleitung 59 in der Unterdruckkammer 61 des Drucksteuerventiles 58 so groß, daß die Druckkraft des Druckes in der Druckkammer 76 ausreicht, die Steuermembran 75 entgegen der Kraft der Steuerfeder 79 an der Anlage 68 zum Anliegen zu bringen. Sinkt nun bei Volllast der Unterdruck bzw. steigt bei Vollast der absolute Druck im Saugrohr 7 stromabwärts der Drosselklappe 6, so wird in der Unterdruckkammer 61 über die Unterdruckleitung 56 auch ein größerer absoluter Druck wirksam, der an der Steuermembran 75 angreifend diese zum Anschlag 81 hin bewegt, wodurch die Steuerfeder 79 entlastet wird und die Ventilmembran 63 den Ventilsitz 62 mehr öffnet, so daß in verstärktem Maße der in der Hochdruckleitung 71, 71' herrschende Druck in der Steuerdruckleitung 55 und im Steuerraum 49 wirksam wird, was zu einer Anreicherung des Gemisches durch Regelung eines größeren Gasdruckes in dem Verdampferraum 48 und damit eines größeren Druckgefälles an der Zumeßöffnung 29 führt. In gleicher Weise ergibt sich bei einer plötzlichen Beschleunigung der Brennkraftmaschine durch plötzliches Öffnen der Drosselklappe 6 eine Druckerhöhung in der Unterdruckleitung 56, die wie bei Vollast eine Anreicherung des Gemisches zur Folge hat.

**Patentanspruch**

Vorrichtung zur Einblasung von Flüssiggas in das Saugrohr (5) einer Brennkraftmaschine (8) mit einem Verdampfer-Druckregelventil (40), das eine ein bewegliches Ventilteil (42) steuernde nachgiebige Wand (45) aufweist, die dem beweglichen Ventilteil (42) abgewandt durch einen Steuerdruck beaufschlagbar ist, der vom Saugrohr (7) abgeleitet wird und durch ein Drucksteuerventil (58) in Abhängigkeit von Betriebskenngrößen der Brennkraftmaschine beeinflußbar ist, und stromabwärts dessen ein Zumeßventil (10) angeordnet ist, dessen bewegliches Ventilteil (14) durch ein im Saugrohr (2) angeordnetes Luftmeßorgan (3) entgegen der Kraft einer Rückstellfeder (19) betätigt mehr oder weniger einen Zumeßquerschnitt (29) für den gasförmigen Kraftstoff zur zum Saugrohr (5) führenden Einblaseleitung (83) öffnet, dadurch gekennzeichnet, daß als bewegliches Ventilteil (14) des Zumeßventiles (10) ein Zumeßkolben (14) dient, der in einer Führungsbohrung durch das Luftmeßorgan (3) axial verschiebbar eine in der Wandung der Führungsbohrung (25) ausgebildete Zumeßöffnung (29) mehr oder weniger öffnet und der mit einer Ringnut (27) versehen ist, deren eine, mit der Zumeßöffnung (29) zusammenwirkende axiale Begrenzungsfläche (28) bei nicht laufender Brennkraftmaschine durch die Rückstellfeder (19) dichtend gegen einen Dichtring (31) geschoben wird, der sich an einer in die Ringnut (27) ragenden Ringschulter (30) der Führungsbohrung abstützt.

**Claim**

Device for injecting liquid gas into the suction pipe (5) of an internal-combustion engine (8), with an evaporator pressure-regulating valve (40) having a flexible wall (45) which controls a movable valve part (42) and which, on the side facing away from the movable valve part (42), can be subjected to a control pressure derived from the suction pipe (7) and capable of being influenced by a pressure control valve (58) as a function of operating characteristics of the internal-combustion engine, there being arranged downstream of the said pressureregulating valve (40) a proportioning valve (10), of which the movable valve part (14), actuated counter to the force of a restoring spring (19) by an air-measuring means (3) arranged in the suction pipe (2), opens to a greater or lesser extent a proportioning cross-section (29) for feeding the gaseous fuel to the injection line (83) leading to the suction pipe (5), characterized in that a proportioning piston (14) serves as the movable valve part (14) of the proportioning valve (10), which piston (14), being axially displaceable in a guide bore by means of the air-measuring means (3), opens to a greater or lesser extent a proportioning orifice (29) made in the wall of the guide bore (25) and is provided with an annular groove (27), of which an axial limiting face (28) interacting with the proportioning orifice (29) is pushed sealingly against a sealing ring (31) by the restoring spring (19) when the internal-combustion engine is not running, the said sealing ring (31) being supported on an annular shoulder (30) of the guide bore projecting into the annular groove (27).

**Revendication**

Equipement pour l'injection de gaz liquéfié dans le tuyau d'aspiration (5) d'un moteur à combustion interne (8), avec une soupape de régulation de pression d'évaporateur (40), qui possède une paroi élastique déformable commandant une partie de soupape (42) mobile, qui est soumise, du côté opposé à la partie de soupape (42) mobile à une pression de commande, qui est dérivée du tuyau d'aspiration (7) et variable à l'aide d'une soupape de commande de pression (58) en fonction des caractéristiques de fonctionnement du moteur à combustion interne et en aval de laquelle est disposée une soupape de dosage (10), dont la partie de soupape (14) mobile est actionnée par un organe de mesure d'air (3) situé dans le tuyau d'aspiration (2), contre l'action d'un ressort de rappel (19), ouvrant plus ou moins une section de dosage (29) pour le combustible gazeux dans la conduite d'insufflation (83) menant au tuyau d'aspiration (5), caractérisé en ce qu'un piston de dosage (14) sert de partie de soupape (14) mobile de la soupape de dosage (10), qui est déplaçable axialement dans un perçage de guidage du fait de l'organe de mesure d'air (3), qui ouvre plus ou moins une ouverture de dosage (29) formée dans la paroi du perçage de guidage (25) et qui est pourvue d'une gorge circulaire (27) dont une surface de limitation (28) axiale, travaillant ensemble avec l'ouverture de dosage (29), est poussée de manière étanche par le ressort de rappel (19), lorsque le moteur à combustion interne ne fonctionne pas, contre une bague d'étanchéité (31) qui s'appuie sur un épaulement annulaire (30) proéminent dans la gorge circulaire (27).

0 084 175

1